# EUROPÄISCHE PATENTSCHRIFT

(11) **EP 3 130 496 B1**
(45) Veröffentlichungstag und Bekanntmachung des Hinweises auf die Patenterteilung: **19.12.2018**
(21) Anmeldenummer: 16183033.6
(22) Anmeldetag: 05.08.2016
(51) Int. Cl.: B60K 1/00, B60K 17/02

(54) **ANTREIBBARE ACHSANORDNUNG**
DRIVEN AXLE ASSEMBLY
SYSTEME D'AXE POUVANT ETRE ENTRAINE

(30) Priorität: 10.08.2015 DE 102015113107; 23.12.2015 DE 102015122801
(43) Veröffentlichungstag der Anmeldung: 15.02.2017
(73) Patentinhaber: Kessler & Co. GmbH & Co. KG, 73453 Abtsgmünd (DE)
(72) Erfinder: Bittlingmaier, Günter, 73432 Aalen-Ebnat (DE)
(74) Vertreter: Manitz Finsterwald Patentanwälte PartmbB

(56) Entgegenhaltungen:
- WO-A1-2014/089157
- DE-A1- 4 300 445
- DE-U1- 20 010 563
- KR-B1- 100 312 914
- US-A- 6 024 182

## Beschreibung

Die Erfindung betrifft eine antreibbare Achsanordnung.

Eine Achsanordnung mit einem Differential und zwei Halbachsen, bei der beide Halbachsen ein Untersetzungsgetriebe aufweisen und in einer der Halbachsen eine Trennkupplung vorgesehen ist, ist aus US 6,024,182 A bekannt. Ferner wird in WO 2014/089157 A1 eine Achsanordnung mit Differential beschrieben, deren Halbachsen jeweils eine Trennkupplung, allerdings kein Untersetzungsgetriebe aufweisen. Das Dokument DE 43 00 445 A1 beschreibt eine Achsanordnung mit einem als tragenden Bauteil der Anordnung ausgebildeten und koaxial zu zwei Halbachsen angeordneten Elektromotor, wobei an den Achsenden jeweils ein Untersetzungsgetriebe vorgesehen ist. Die in DE 200 10 563 U1 beschriebene Achsanordnung ist ähnlich aufgebaut, weist aber zusätzlich eine Untersetzung zwischen dem Motor und dem Differential auf. Ferner ist aus KR 10-0312914 B1 eine Achsanordnung bekannt, bei der die von einem Differential ausgehenden Halbachsen jeweils eine Trennkupplung aufweisen.

Der Bereich des Sonderfahrzeugbaus umfasst Fahrzeuge oder Fahrzeugmodule wie insbesondere Anhänger, die eine Vielzahl von Achsen aufweisen, um das Gewicht einer Last auf mehrere Achsen zu verteilen, die in Bewegungsrichtung des Fahrzeugs hintereinander vorgesehen sind. Jede dieser Achsen kann beispielsweise an ihren beiden jeweiligen Enden ein Rad oder mehrere Räder, z.B. eine Zwillingsradanordnung, aufweisen.

Bei einem Transport über einen unebenen Untergrund ist eine möglichst individuelle Lageanpassung der Räder erforderlich, um zu vermeiden, dass einzelne Räder den Kontakt zum Untergrund verlieren, wodurch die übrigen Räder verstärkt belastet würden, die Achsen starke Biegemomente erfahren würden und die Fahrbewegung des Fahrzeugs insgesamt destabilisiert würde. Es ist daher zweckmäßig, die einzelnen Achsen beweglich und/oder in im Wesentlichen vertikaler Richtung federnd zu lagern. Durch eine derartige Beweglichkeit ergeben sich jedoch Einschränkungen hinsichtlich des Bauraums.

Wenn es sich bei dem Fahrzeug um einen Anhänger handelt, wird dieser in der Regel durch eine Zugmaschine angetrieben, an die der Anhänger angekoppelt wird. Der Anhänger wird dabei also lediglich geschleppt. Beispielsweise wenn eine Steigung zu bewältigen ist, kann ein solcher schleppender Antrieb nicht ausreichend sein. Für einen solchen Fall oder auch zur allgemeinen Verbesserung der Traktion insbesondere in schwierigem Gelände ist es daher vorteilhaft, wenn die Achsen des Anhängers (oder zumindest einzelne der Achsen) selbst direkt antreibbar sind. Durch direkt angetriebene Achsen kann auch eine Selbstfahrfunktion eines Anhängers erreicht werden, der dann auch ohne Zugfahrzeug antreibbar ist. Für den Antrieb können an dem Anhänger bzw. an den Achsen Motoren, insbesondere Hydromotoren oder Elektromotoren, vorgesehen oder anschließbar sein, die z.B. von einer zentralen Antriebseinheit, beispielsweise mit Hydraulikdruck bzw. Strom, versorgt werden. Der Anhänger kann aber auch für mehrere antreibbare Achsen einen gemeinsamen Motor aufweisen, dessen Antriebsmoment auf die mehreren Achsen übertragen und verteilt wird.

Mittels direkt antreibbarer Achsen können somit zwar insbesondere Transportabschnitte bewältigt werden, die hohe Drehmomente erfordern und daher oder aus sonstigen Gründen im Schleppbetrieb nicht bewältigt werden könnten. Gleichwohl kann ein Schleppbetrieb, insbesondere im Hinblick auf eine Fortbewegung mit vergleichsweise hohen Geschwindigkeiten und/oder auf ebenem Untergrund, Vorteile gegenüber einem direkten Antrieb der Achsen aufweisen, weil etwa eine bessere Dynamik zum Beispiel mittels verschiedener Gänge erreicht werden kann.

Zwar können die antreibbaren Achsen grundsätzlich auch wahlweise nicht angetrieben und stattdessen geschleppt werden. Hierbei ergibt sich jedoch das Problem, dass im Schleppbetrieb Antriebs- und/oder Getriebekomponenten der antreibbaren Achsen aufgrund von hohen Drehzahlen stark verschleißen oder beschädigt werden können. Eine Möglichkeit, direkt angetriebene Achsen dennoch im Schleppbetrieb einzusetzen, besteht darin, die direkt angetriebenen Achsen bei Schnellfahrt anzuheben (sogenanntes "Liften"), um sie gegen ein Überdrehen zu schützen. Für eine solche Funktionalität müssen aber zusätzliche Mittel vorgesehen werden, welche die Konstruktion verkomplizieren und Kosten verursachen.

Es ist eine Aufgabe der Erfindung, insbesondere zur Ermöglichung von Fahrzeugmodulen, die wahlweise im Schleppbetrieb oder mittels eines eigenen direkten Antriebs eingesetzt werden können, eine antreibbare Achsanordnung bereitzustellen, welche die genannten Nachteile vermeidet und einen kompakten Aufbau aufweist.

Die Aufgabe wird durch eine antreibbare Achsanordnung mit den Merkmalen des Anspruchs 1 gelöst. Dabei weist die antreibbare Achsanordnung zwei Halbachsen zum Antreiben einer jeweiligen Radnabe auf, wobei die beiden Halbachsen vorzugsweise in einem Gehäuse der Achsanordnung angeordnet und koaxial zueinander ausgerichtet sind. Die Achsanordnung umfasst ferner ein Differentialgetriebe zur Verteilung eines Antriebsmoments eines (insbesondere anschließbaren oder dauerhaft angeschlossenen) Motors auf die beiden Halbachsen, wobei das Differentialgetriebe einen Eingang zum Empfangen des Antriebsmoments und zwei Ausgänge zum Ausgeben (eines jeweiligen Anteils) des Antriebsmoments an die jeweilige Halbachse aufweist. Die Halbachsen weisen eine jeweilige Kupplung sowie ein jeweiliges Untersetzungsgetriebe mit einem dem Differentialgetriebe zugeordneten Eingangselement und einem der Radnabe zugeordneten Ausgangselement auf, welches eine Drehzahl des Ausgangselements relativ zu dem Eingangselement ins Langsame übersetzt. Dabei ist die jeweilige Kupplung derart angeordnet, dass die jeweilige Radnabe mittels der jeweiligen Kupplung wahlweise antriebswirksam mit dem jeweiligen Ausgang des Differentialgetriebes verbindbar oder hiervon trennbar ist. Mit anderen Worten weisen die Halbachsen eine jeweilige Kupplung auf, die zwischen dem Differentialgetriebe und der von der jeweiligen Halbachse angetriebenen Radnabe angeordnet ist.

Um an der antreibbaren Achsanordnung besonders hohe Drehmomente erzeugen zu können, ist an den Halbachsen - beispielsweise an den Radnaben oder im Bereich der Radnaben - ein jeweiliges Untersetzungsgetriebe vorgesehen. Somit ergibt sich zwar das Problem, dass im Schleppbetrieb die ohnehin hohe Drehzahl der auf dem Untergrund abrollenden Räder durch das (im Schleppbetrieb umgekehrt betriebene, also eine Übersetzung ins Schneller bewirkende) Untersetzungsgetriebe zu noch höheren Drehzahlen übersetzt wird und hierdurch erhöhten Verschleiß oder sogar Beschädigungen an dem Differentialgetriebe oder an dem Motor verursachen könnte. Letzteres kann jedoch durch Entkoppeln des Differentialgetriebes von den Radnaben mittels der an den Halbachsen vorgesehenen Kupplungen verhindert werden. Dabei ist es bevorzugt, wenn die jeweilige Kupplung zwischen dem Differentialgetriebe und dem jeweiligen Untersetzungsgetriebe vorgesehen ist, so dass einerseits das Eingangselement des jeweiligen Untersetzungsgetriebes mittels der jeweiligen Kupplung wahlweise antriebswirksam mit dem jeweiligen Ausgang des Differentialgetriebes verbindbar oder hiervon trennbar ist und andererseits das Ausgangselement des jeweiligen Untersetzungsgetriebes, insbesondere dauerhaft, antriebswirksam mit der jeweiligen Radnabe verbunden oder verbindbar ist (Letzteres falls die Radnaben nicht Teil der Achsanordnung sind, sondern die Achsanordnung lediglich Mittel zum Befestigen der eigentlichen Radnaben aufweist). Grundsätzlich kann die jeweilige Kupplung aber auch auf der anderen Seite des jeweiligen Untersetzungsgetriebes, also zwischen dem jeweiligen Untersetzungsgetriebe und der jeweiligen Radnabe, vorgesehen sein. In diesem Fall ist also das Ausgangselement des jeweiligen Untersetzungsgetriebes mittels der jeweiligen Kupplung wahlweise antriebswirksam mit der jeweiligen Radnabe verbindbar oder hiervor trennbar.

Bei der erfindungsgemäßen antreibbaren Achsanordnung ist also in jeder Halbachse eine jeweilige Kupplung, insbesondere eine reine Trennkupplung, vorgesehen, mittels derer die antriebswirksame Verbindung des Differentialgetriebes mit der jeweiligen Radnabe nach Bedarf unterbrochen werden kann. Wenn die Achsanordnung nicht mittels des genannten Motors angetrieben, sondern im Schleppbetrieb verwendet wird, kann die jeweilige Kupplung geöffnet sein, so dass sich zwar an der Achsanordnung angeordnete Räder drehen und somit in umgekehrte Richtung ein Drehmoment in die Achsanordnung einleiten, die Rotation aber nicht bis zum Differentialgetriebe und darüber hinaus bis zum Motor weitergeleitet wird, sondern an der geöffneten Trennkupplung endet.

Obwohl das Untersetzungsgetriebe bei dieser umgekehrten Drehmomentübertragungsrichtung im Schleppbetrieb dazu ausgebildet ist, die Rotation der Räder zu höheren Drehzahlen zu übersetzen, kann durch die jeweilige Kupplung je nach ihrer Position innerhalb der jeweiligen Halbachse verhindert werden, dass das Drehmoment das jeweilige Untersetzungsgetriebe überhaupt erreicht oder aber dass die durch das jeweilige Untersetzungsgetriebe erhöhten Drehzahlen das Differentialgetriebe und den Motor erreichen, so dass jedenfalls diese Komponenten der Achsanordnung nicht übermäßig belastet werden.

Dabei ist es etwa aufgrund des vorhandenen Bauraums vorteilhaft, die genannte jeweilige Kupplung zwischen dem Differential und dem Untersetzungsgetriebe vorzusehen. Sie kann dann insbesondere in einem mittleren Bereich der Achsanordnung, der gegenüber Endbereichen der Achsanordnung, an denen jeweilige Radnaben angeordnet sind, einen größeren Querschnitt aufweisen kann, aufgenommen sein. Des Weiteren hat eine Anordnung der Kupplung auf der Antriebsseite des Untersetzungsgetriebes gegenüber einer Anordnung auf der Abtriebsseite den Vorteil, dass eine Steuervorrichtung für die jeweilige Kupplung in dem genannten mittleren Bereich angeordnet sein kann und die Aktuierung der jeweiligen Kupplung dann nicht über das jeweilige Untersetzungsgetriebe hinweg zu erfolgen braucht, was unter Umständen nur schwer zu realisieren ist. Ein weiterer Vorteil dieser Anordnung der Kupplung besteht darin, dass eine im Schleppbetrieb erzeugte und von der jeweiligen Radnabe in die jeweilige Halbachse eingeleitete Drehbewegung durch das Untersetzungsgetriebe zwar zu höheren Drehzahlen, aber zu geringerem Drehmoment übersetzt wird. Daher kann die Kupplung auf der Differentialseite des Untersetzungsgetriebes leichter dimensioniert werden, als wenn sie radseitig zum Untersetzungsgetriebe angeordnet ist, wo sie für höhere Drehmomente ausgelegt sein müsste.

Während das jeweilige Untersetzungsgetriebe bei dieser Ausführungsform aufgrund der jeweiligen Kupplung eingangsseitig lediglich wahlweise mit anderen Getriebeelementen, nämlich konkret dem Ausgang des Differentialgetriebes, antriebswirksam verbunden ist, ist das jeweilige Untersetzungsgetriebe dagegen ausgangsseitig vorzugsweise dauerhaft antriebswirksam mit dem radseitigen Ende der jeweiligen Halbachse verbunden.

Dieses radseitige Ende, zu dem bei direkt angetriebener Achsanordnung das Antriebsmoment übertragen wird, kann dabei durch das Ausgangselement des Untersetzungsgetriebes selbst gebildet sein, kann als Flansch zur Befestigung jeweiliger Radnaben ausgebildet sein (und dabei auch einstückig mit dem Ausgangselement des jeweiligen Untersetzungsgetriebes ausgebildet sein) oder kann durch eine jeweilige Radnabe oder jeweilige Radnaben gebildet werden.

Die beiden Halbachsen einer erfindungsgemäßen Achsanordnung weisen nicht nur jeweils die in der genannten Weise miteinander verbundenen Elemente (nämlich jeweilige Kupplung und jeweiliges Untersetzungsgetriebe) auf, sondern sind im Wesentlichen einander entsprechend, insbesondere spiegelsymmetrisch oder punktsymmetrisch zueinander, ausgebildet. Dies ermöglicht vorteilhafterweise die Verwendung einander entsprechender Komponenten für beide Halbachsen, wodurch die Fertigung einfacher und günstiger wird.

Zudem ist das jeweilige Untersetzungsgetriebe als Planetengetriebe ausgebildet, das ein Sonnenrad, einen Planetenträger und ein Hohlrad umfasst, wobei an dem Planetenträger eine Anordnung von Planetenrädern drehbar gelagert ist, die mit dem Sonnenrad und dem Hohlrad kämmen, wobei das Hohlrad stationär ausgebildet ist, also unmittelbar oder mittelbar mit einem Gehäuse der Achsanordnung starr verbunden oder sogar unmittelbar an dem Gehäuse, insbesondere integral in dem Gehäuse ausgebildet ist.

Des Weiteren ist vorgesehen, dass das Sonnenrad dieses Planetengetriebes das genannte Eingangselement des jeweiligen Untersetzungsgetriebes bildet und der Planetenträger des Planetengetriebes das genannte Ausgangselement des jeweiligen Untersetzungsgetriebes bildet. Auf diese Weise kann mit vergleichsweise wenigen Bauteilen in kompakter Anordnung ein am Eingangselement eingeleitetes Antriebsmoment am Ausgangselement des jeweiligen Untersetzungsgetriebes mit verringerter Drehzahl und erhöhtem Drehmoment ausgegeben werden. Durch die Verwendung eines Motors mit hoher Drehzahl können auf diese Weise große Drehmomente zum Antrieb der Radnaben erzeugt werden.

Ferner weisen die Halbachsen der erfindungsgemäßen Achsanordnung eine jeweilige Achswelle auf, wobei das Eingangselement des jeweiligen Untersetzungsgetriebes über die jeweilige Achswelle und gegebenenfalls über die jeweilige Kupplung antriebswirksam mit dem jeweiligen Ausgang des Differentialgetriebes verbunden (bzw. verbindbar) ist. In den jeweiligen Halbachsen ist also zwischen dem jeweiligen Ausgang des Differentialgetriebes und dem Eingangselement des jeweiligen Untersetzungsgetriebes ein durch die jeweilige Achswelle gebildetes Zwischenelement vorgesehen, welches der Übertragung des Antriebsmoments vom Differentialgetriebe zum jeweiligen Untersetzungsgetriebe dient.

Dabei ist des Weiteren vorgesehen, dass das Eingangselement des jeweiligen Untersetzungsgetriebes einen Hohlwellenabschnitt aufweist, wobei die jeweilige Achswelle teilweise, insbesondere mit einem Ende, in dem Hohlwellenabschnitt des Eingangselements des jeweiligen Untersetzungsgetriebes aufgenommen ist. Bei dem genannten Ende handelt es sich insbesondere um das axial äußere Ende der jeweiligen Achswelle. Auf diese Weise ist die jeweilige Achswelle also zumindest teilweise dadurch gelagert, dass sie in dem Hohlwellenabschnitt des Eingangselements des jeweiligen Untersetzungsgetriebes aufgenommen ist. Dabei ist die jeweilige Achswelle relativ zu diesem Hohlwellenabschnitt, in dem sie aufgenommen ist, drehbar und kann insbesondere dadurch zu gemeinsamer Drehung mit dem Hohlwellenabschnitt verbunden werden, dass die jeweilige Kupplung geschlossen wird. Ein direktes Zusammenwirken der Achswelle mit dem Hohlwellenabschnitt des Eingangselements, beispielsweise mittels einer Steckverzahnung oder Kerbverzahnung, erfolgt in diesem Fall also vorzugsweise nicht.

Insbesondere um eine gute Drehbarkeit und relative Lagerung der jeweiligen Achswelle gegenüber dem Hohlwellenabschnitt des Eingangselements des jeweiligen Untersetzungsgetriebes zu gewährleisten, ist die jeweilige Achswelle ferner in dem Hohlwellenabschnitt des Eingangselements des jeweiligen Untersetzungsgetriebes über eine Lagervorrichtung drehbar gelagert ist. Bei dieser Lagervorrichtung handelt es sich insbesondere um eine Wälzlagervorrichtung. Alternativ kann aber auch eine Gleitlagerung vorgesehen sein. Dabei ist diese zwischen der Achswelle und dem Hohlwellenabschnitt des Eingangselements des jeweiligen Untersetzungsgetriebes vorgesehene, also nicht direkt am Gehäuse abgestützte Lagervorrichtung vorzugsweise für relativ hohe Drehzahlen ausgelegt, um im Schleppbetrieb der Achsanordnung das (dann als Ausgang wirkende) Eingangselement des jeweiligen Untersetzungsgetriebes mit den resultierenden hohen Drehzahlen gegenüber der jeweiligen Achswelle zuverlässig frei drehen zu lassen, ohne ein Drehmoment auf die jeweilige Achswelle zu übertragen.

Des Weiteren ist die jeweilige Achswelle ausschließlich indirekt an einem Gehäuse der Achsanordnung gelagert, d.h. die jeweilige Achswelle ist ausschließlich über andere Komponenten der Achsanordnung an dem Gehäuse gelagert. Somit kann für eine drehbare Lagerung der Achswellen auf eigens für die jeweilige Achswelle vorgesehene Lagervorrichtungen, insbesondere Wälzlager, verzichtet werden. Die indirekte Lagerung der jeweiligen Achswelle kann beispielsweise dadurch erfolgen, dass ein jeweiliger Endabschnitt der jeweiligen Achswelle in einem Hohlwellenabschnitt des jeweiligen Ausgangs des Differentialgetriebes bzw. in dem Hohlwellenabschnitt des Eingangselements des jeweiligen Untersetzungsgetriebes aufgenommen ist. Die indirekte Lagerung der jeweiligen Achswelle kann grundsätzlich aber auch auf andere Weise erfolgen, solange zwischen der jeweiligen Achswelle und dem Gehäuse keine die jeweilige Achswelle unmittelbar an dem Gehäuse lagernde Lagervorrichtung, insbesondere keine Wälzlagervorrichtung, vorgesehen ist.

Gemäß einer bevorzugten Weiterbildung ist die jeweilige Achswelle antriebswirksam mit dem jeweiligen Ausgang des Differentialgetriebes sowie mit dem Eingangselement des jeweiligen Untersetzungsgetriebes verbunden oder verbindbar. Dabei ist die jeweilige Achswelle vorzugsweise dauerhaft antriebswirksam mit dem jeweiligen Ausgang des Differentialgetriebes verbunden und mittels der jeweiligen Kupplung wahlweise antriebswirksam mit dem Eingangselement des jeweiligen Untersetzungsgetriebes verbindbar. Mit anderen Worten ist die jeweilige Kupplung zwischen der jeweiligen Achswelle und dem Eingangselement des jeweiligen Untersetzungsgetriebes wirksam. Dazu kann beispielsweise zumindest ein Teil der jeweiligen Kupplung, beispielsweise eine Schiebemuffe oder eine Verzahnung, drehfest mit der jeweiligen Achswelle verbunden sein und kraftschlüssig, reibschlüssig und/oder formschlüssig mit dem Eingangselement des jeweiligen Untersetzungsgetriebes, insbesondere mit einem an dem Eingangselement vorgesehenen Kupplungsabschnitt wie etwa einem Zahnrad oder einer Gegenverzahnung, verbindbar sein.

Zur Betätigung der jeweiligen Kupplung zwischen einer koppelnden und einer trennenden Stellung kann ferner die jeweilige Kupplung bzw. zumindest ein Teil der Kupplung axial beweglich an der jeweiligen Achswelle angeordnet sein. Alternativ hierzu kann die jeweilige Kupplung bzw. zumindest ein Teil der Kupplung mit der jeweiligen Achswelle auch axial starr verbunden, aber gemeinsam mit der jeweiligen Achswelle axial beweglich zwischen einer koppelnden und einer trennenden Stellung gelagert sein.

Gemäß einer weiteren vorteilhaften Ausführungsform weist der jeweilige Ausgang des Differentialgetriebes einen Hohlwellenabschnitt auf, wobei die jeweilige Achswelle teilweise, insbesondere mit einem Ende, in dem Hohlwellenabschnitt des Ausgangs des Differentialgetriebes drehfest aufgenommen ist. Die drehfeste Verbindung der Achswelle mit dem Ausgang des Differentialgetriebes kann dabei beispielsweise über eine Steckverzahnung oder eine Kerbverzahnung erfolgen. Durch die Aufnahme der jeweiligen Achswelle, insbesondere eines Endabschnitts der jeweiligen Achswelle, in den Hohlwellenabschnitt des jeweiligen Ausgangs des Differentialgetriebes kann die jeweilige Achswelle zumindest mit ihrem axial inneren Ende an diesem Ausgang gelagert sein. Der Ausgang wiederum kann als Teil des Differentialgetriebes beispielsweise über den Differentialkorb, insbesondere indirekt über den Zahneingriff mit den Ausgleichskegelrädern des Differentialgetriebes, gegenüber dem Gehäuse der Achsanordnung über eine Lagervorrichtung, vorzugsweise eine Wälzlagervorrichtung gelagert sein. Somit kann der jeweilige Ausgang, zumindest in radialer Richtung, ausschließlich indirekt gelagert sein. Insbesondere ist die jeweilige Achswelle über den Ausgang des Differentialgetriebes indirekt an dem Gehäuse drehbar gelagert. Die genannte Lagervorrichtung lagert also zugleich einerseits das Differentialgetriebe (direkt) und andererseits zumindest einen (axial inneren) Endabschnitt der jeweiligen Achswelle (indirekt). Daher kann durch eine solche Anordnung die Gesamtzahl der erforderlichen Lagervorrichtungen reduziert werden.

An dem Hohlwellenabschnitt des jeweiligen Ausgangs des Differentialgetriebes bzw. dem Hohlwellenabschnitt des Eingangselements des jeweiligen Untersetzungsgetriebes ist die jeweilige Achswelle insbesondere radial gelagert. Zur axialen Lagerung der jeweiligen Achswelle können zusätzlich an deren Enden Gleitlageranlaufscheiben vorgesehen sein, die an oder in dem Differentialgetriebe bzw. dem jeweiligen Untersetzungsgetriebe angeordnet sein können.

Bei der vorstehend genannten Ausführungsform, bei der nicht nur das Eingangselement des jeweiligen Untersetzungsgetriebes, sondern auch der jeweilige Ausgang des Differentialgetriebes einen Hohlwellenabschnitt aufweist, in dem die jeweilige Achswelle teilweise aufgenommen ist, kann die jeweilige Achswelle einerseits mit einem axial inneren Endabschnitt in dem Hohlwellenabschnitt des jeweiligen Ausgangs des Differentialgetriebes aufgenommen und dadurch darin gelagert sein und mit dem entgegengesetzten, axial äußeren Endabschnitt in dem Hohlwellenabschnitt des Eingangselements des jeweiligen Untersetzungsgetriebes aufgenommen und dadurch darin gelagert sein. Durch eine solche Ausführung entfällt vorteilhafterweise die Notwendigkeit einer eigenen direkten Lagerung der jeweiligen Achswelle an dem Gehäuse der Achsanordnung, wodurch Bauraum und Kosten eingespart werden können.

Auch das Eingangselement des jeweiligen Untersetzungsgetriebes ist vorzugsweise ausschließlich indirekt an dem Gehäuse drehbar gelagert. Die indirekte Lagerung des Eingangselements des jeweiligen Untersetzungsgetriebes kann dabei einerseits aus der Anordnung des Eingangselements in dem jeweiligen Untersetzungsgetriebe, also etwa aus der Ausbildung als Sonnenrad des Planetengetriebes, resultieren und andererseits daraus resultieren, dass das Eingangselement über die genannte Lagervorrichtung, die vorzugsweise eine Wälzlagervorrichtung ist, an der jeweiligen Achswelle drehbar gelagert ist. Dadurch, dass sich Elemente der Achsanordnung zum Teil wechselseitig aneinander abstützen und somit gegenseitig lagern, wird vorteilhafterweise die Zahl der erforderlichen Lagervorrichtungen, insbesondere Wälzlagervorrichtungen, reduziert.

Das beschriebene ausschließlich indirekte Lagern, insbesondere der jeweiligen Achswelle, ist dabei jeweils auf eine radiale Lagerung, insbesondere auf eine Wälzlagerung, bezogen zu verstehen. Einer indirekten Lagerung steht dabei nicht grundsätzlich entgegen, dass Führungen oder Stützelemente sonstiger Art (z.B. Anlaufscheiben) zwischen einem jeweiligen Element und dem Gehäuse der Achsanordnung vorgesehen sein können.

Gemäß einer weiteren vorteilhaften Ausführungsform ist die jeweilige Kupplung als formschlüssige Kupplung, beispielsweise als Klauenkupplung oder eine Schiebemuffe aufweisend, ausgebildet. Dabei kann beispielsweise ein eingangsseitiger (also differentialgetriebeseitiger) Teil der jeweiligen Kupplung mit der jeweiligen Achswelle drehfest und vorzugsweise axial verschieblich verbunden sein, während ein ausgangsseitiger (also radnabenseitiger) Teil der jeweiligen Kupplung mit dem Eingangselement des jeweiligen Untersetzungsgetriebes drehfest und vorzugsweise starr verbunden ist. Hierdurch ergibt sich eine besonders einfache Aktuierung der jeweiligen Kupplung von der Mitte der Achsanordnung aus, d.h. aus der Richtung des Differentialgetriebes. Alternativ kann der eingangsseitige Teil der jeweiligen Kupplung mit der jeweiligen Achswelle drehfest und starr verbunden, aber gemeinsam mit der jeweiligen Achswelle axial verschieblich sein. Beispielsweise kann es sich bei dem eingangsseitigen Teil um eine Schiebemuffe und bei dem ausgangsseitigen Teil um ein entsprechendes Zahnrad handeln. Es ist generell jedoch auch möglich, dass ein eingangsseitiger (also differentialgetriebeseitiger) Teil der jeweiligen Kupplung mit der jeweiligen Achswelle starr verbunden ist, während ein ausgangsseitiger (also radnabenseitiger) Teil der jeweiligen Kupplung (z.B. Schiebemuffe) mit dem Eingangselement des jeweiligen Untersetzungsgetriebes drehfest und axial verschieblich verbunden ist. Durch die Verwendung einer formschlüssigen Kupplung wird im geschlossenen Zustand der jeweiligen Kupplung eine zuverlässige Übertragung des Antriebsmoments erreicht, während im offenen Zustand der jeweiligen Kupplung eine zuverlässige Trennung erfolgt, so dass kein Antriebsmoment über die Kupplung hinweg übertragen wird.

Gemäß einer alternativen Ausführungsform kann die jeweilige Kupplung aber auch als kraftschlüssige Kupplung ausgebildet sein.

Des Weiteren ist es vorteilhaft, wenn der jeweiligen Kupplung eine jeweilige Schaltvorrichtung zum Schalten der jeweiligen Kupplung zugeordnet ist. Dabei ergibt sich insbesondere das Problem, dass die Schaltvorrichtung einerseits aus Gründen des Bauraums und andererseits, um sie in geeigneter Weise ansteuern zu können, nicht an beliebiger Stelle der Achsanordnung angeordnet werden kann. Insbesondere wenn die Achsanordnung für eine schwenkbar gelagerte Pendelachse ausgebildet ist, wird zwischen den Radnaben und dem mittigen Differentialgetriebe ein jeweiliger Freiraum für die Pendelbewegung der Achsanordnung benötigt, und ein Schaltsignal wird vorzugsweise zentral, also beispielsweise im Bereich der schwenkbaren Lagerung der Pendelachse, zur Achsanordnung übertragen, so dass eine Schaltvorrichtung oder zumindest ein Aktuator der Schaltvorrichtung vorzugsweise in einem zentralen Bereich der Achsanordnung angeordnet ist.

Dabei ist es ferner bevorzugt, wenn die jeweilige Schaltvorrichtung einen Aktuator und ein Übertragungselement aufweist, um einen Schalthub des Aktuators mittels des Übertragungselements zur jeweiligen Kupplung zu übertragen, wobei das Übertragungselement ein dem Aktuator zugeordnetes erstes Ende und ein der jeweiligen Kupplung zugeordnetes zweites Ende aufweist, und wobei das erste Ende des Übertragungselements, insbesondere axial, näher an dem Differentialgetriebe und/oder radial weiter von der Drehachse der Achsanordnung entfernt angeordnet ist als das zweite Ende. Insbesondere ist das genannte erste Ende des Übertragungselements axial, d.h. entlang einer Drehachse der Achsanordnung betrachtet, näher an dem Differentialgetriebe angeordnet als das zweite Ende. Mit anderen Worten können das erste Ende des Übertragungselements und somit der Aktuator relativ zu dem zweiten Ende des Übertragungselements und somit der jeweiligen Kupplung axial nach innen versetzt sein. Zusätzlich können hierdurch das erste Ende des Übertragungselements und somit der Aktuator relativ zu dem zweiten Ende des Übertragungselements und somit der jeweiligen Kupplung bezüglich der Drehachse der Achsanordnung auch radial nach außen versetzt sein.

Eine solche Anordnung hat also den Vorteil, dass ein jeweiliger Schalthub mittels des Übertragungselements über eine gewisse Distanz hinweg und/oder entlang gewinkelter Verläufe übertragen werden kann. Dadurch kann der Aktuator flexibler innerhalb der Achsanordnung angeordnet werden und braucht sich nicht in unmittelbarer Nähe zur jeweiligen Kupplung zu befinden. Insbesondere wenn der Bauraum stark eingeschränkt ist, können die Kupplung und der Aktuator vergleichsweise daher flexibel positioniert werden, solang das Übertragungselement, das vergleichsweise wenig Bauraum beanspruchen kann, eine Übertragung des Schalthubs vom Aktuator zur jeweiligen Kupplung bewirkt.

Beispielsweise werden durch eine derartige Schaltvorrichtung Anordnungen ermöglicht, bei denen der Aktuator der jeweiligen Schaltvorrichtung näher an dem Differentialgetriebe angeordnet ist als an der jeweiligen Kupplung. Ferner ist es möglich, dass das erste Ende des jeweiligen Übertragungselements von der Drehachse der Achsanordnung radial weiter entfernt ist als das zweite Ende. Somit ist es insbesondere möglich, den Aktuator in einem zentralen Bereich der Achsanordnung mit vergleichsweise großem Querschnitt anzuordnen, während die jeweilige Kupplung auch in einem Bereich angeordnet sein kann, an dem etwa die Radnaben gelagert sind und der daher einen vergleichsweise geringen Durchmesser aufweist.

Als Aktuator kommen grundsätzlich Vorrichtungen aller Art in Betracht, die geeignet sind, einen Schalthub zu erzeugen. Dabei kann es sich beispielsweise um einen hydraulischen oder einen pneumatischen Aktuator handeln.

Bei einer beispielhaften Achsanordnung kann insbesondere die Kupplung bezüglich der Drehachse der Achsanordnung axial und radial zumindest teilweise innerhalb einer an der jeweiligen Halbachse angeordneten Radnabe angeordnet sein, wobei es sich bei der Radnabe auch um eine Anordnung zweier paralleler und im Wesentlichen unmittelbar benachbarter Naben für eine Zwillingsradanordnung handeln kann. Der Aktuator der jeweiligen Schaltvorrichtung kann hingegen axial außerhalb der genannten Radnabe der jeweiligen Halbachse angeordnet sein.

Gemäß einer bevorzugten Weiterbildung weist das Übertragungselement eine Gelenkanordnung auf. Die Gelenkanordnung kann beispielsweise einen oder mehrere Schwenk- oder Kipphebel umfassen, die relativ zu dem Gehäuse schwenkbar gelagert sein können. Auf diese Weise kann der Schalthub besonders flexibel und anders als bei einem ausschließlich längsverschieblichen Übertragungselement, wie etwa einer Schubstange, auch entlang gekrümmter Pfade innerhalb der Achsanordnung übertragen werden.

Unabhängig von der konkreten Ausbildung der Schaltvorrichtungen beider Halbachsen ist bei einer weiteren vorteilhaften Ausführungsform vorgesehen, dass die Schaltvorrichtungen zum Schalten der jeweiligen Kupplung der beiden Halbachsen dazu ausgebildet sind, beide Kupplungen gemeinsam zu schalten. Ein solcher Schaltmodus, bei dem beide Kupplungen der Achsanordnung gemeinsam geschaltet werden, kann optional vorgesehen sein. Vorzugsweise können die beiden Kupplungen aber ausschließlich gemeinsam geschaltet werden, um sicherzustellen, dass im Schleppbetrieb der Achsanordnung stets beide Kupplungen geöffnet sind und bei direkt angetriebener Achsanordnung stets beide Kupplungen geschlossen sind.

Um die beiden Kupplungen ausschließlich gemeinsam zu schalten, kann gemäß einer vorteilhaften Ausführungsform vorgesehen sein, dass den beiden Kupplungen eine gemeinsame Schaltvorrichtung zugeordnet ist, die einen für beide Kupplungen gemeinsamen Aktuator und wenigstens ein jeweiliges Übertragungselement für die beiden Kupplungen aufweist, um einen Schalthub des Aktuators mittels des jeweiligen Übertragungselements zur jeweiligen Kupplung zu übertragen. Hierbei kann - in entsprechender Weise wie vorstehend erläutert - das jeweilige Übertragungselement ein dem Aktuator zugeordnetes erstes Ende und ein der jeweiligen Kupplung zugeordnetes zweites Ende aufweisen, wobei das erste Ende des jeweiligen Übertragungselements, insbesondere axial, näher an dem Differentialgetriebe und/oder radial weiter von der Drehachse der Achsanordnung entfernt angeordnet ist als das zweite Ende. Das jeweilige Übertragungselement kann insbesondere eine Gelenkanordnung umfassen.

Gemäß einer weiteren bevorzugten Ausführungsform ist an der Achsanordnung ein Eingangsdrehzahlsensor vorgesehen, um eine Eingangsdrehzahl des Eingangs des Differentialgetriebes zu erfassen, wobei an beiden Halbachsen ein jeweiliger Ausgangsdrehzahlsensor vorgesehen ist, um eine Ausgangsdrehzahl der jeweiligen Kupplung zu erfassen, und wobei der Achsanordnung eine Steuervorrichtung zugeordnet ist, die dazu ausgebildet ist, die jeweilige Kupplung lediglich dann zu schließen, wenn der Unterschied zwischen der erfassten Eingangsdrehzahl des Eingangs des Differentialgetriebes und der erfassten Ausgangsdrehzahl der jeweiligen Kupplung geringer als ein Schwellenwert ist. Der Eingangsdrehzahlsensor erfasst folglich eine motorseitige Eingangsdrehzahl am Eingang des Differentialgetriebes. Da das Differentialgetriebe das Antriebsmoment auf seine beiden Ausgänge verteilt, entspricht die so erfasste Eingangsdrehzahl einer mittleren Eingangsdrehzahl der beiden jeweiligen Kupplungen. Die mittels des jeweiligen Ausgangsdrehzahlsensors ausgangsseitig, d.h. radseitig, an der jeweiligen Kupplung erfasste Ausgangsdrehzahl kann dann mit dieser mittleren Eingangsdrehzahl der jeweiligen Kupplung verglichen werden, um sicherzustellen, dass die jeweilige Kupplung nur dann geschlossen, also beispielsweise eingerückt, wird, wenn die Drehzahldifferenz kleiner als der genannte Schwellenwert, insbesondere zumindest nahezu Null ist. Auf diese Weise erfolgt ein Schließen der jeweiligen Kupplung im Wesentlichen nur synchron, d.h. bei nahezu identischer Eingangs- und Ausgangsdrehzahl.

Wenn ein Eingangsdrehzahlsensor am Eingang des Differentialgetriebes vorgesehen wird, reicht ein Eingangsdrehzahlsensor für beide jeweiligen Kupplungen, was im Hinblick sowohl auf die Kosten als auch den Bauraum günstig ist. Alternativ zu der vorstehenden Ausführungsform ist es aber im Hinblick auf eine verbesserte Feststellung eines Synchronzustands an den einzelnen jeweiligen Kupplungen vorteilhaft, wenn an beiden Halbachsen ein jeweiliger Eingangsdrehzahlsensor vorgesehen ist, um eine Eingangsdrehzahl der jeweiligen Kupplung zu erfassen. Auch bei dieser alternativen Ausführungsform ist an beiden Halbachsen ferner ein jeweiliger Ausgangsdrehzahlsensor vorgesehen, um eine Ausgangsdrehzahl der jeweiligen Kupplung zu erfassen, wobei der Achsanordnung eine Steuervorrichtung zugeordnet ist, die dazu ausgebildet ist, die jeweilige Kupplung lediglich dann zu schließen, wenn der Unterschied zwischen der erfassten Eingangsdrehzahl der jeweiligen Kupplung und der erfassten Ausgangsdrehzahl der jeweiligen Kupplung geringer als ein Schwellenwert ist. Anstelle einer mittleren Eingangsdrehzahl für beide Kupplungen, wird also für jede der Kupplungen eine eigene Eingangsdrehzahl bestimmt.

Bei dieser Ausführungsform mit zwei Eingangsdrehzahlsensoren kann ferner die Steuervorrichtung dazu ausgebildet sein, beide Kupplungen gemeinsam lediglich dann zu schließen, wenn sowohl der Unterschied zwischen der erfassten Eingangsdrehzahl und der erfassten Ausgangsdrehzahl der einen jeweiligen Kupplung geringer als ein erster Schwellenwert ist und der Unterschied zwischen der erfassten Eingangsdrehzahl und der erfassten Ausgangsdrehzahl der anderen jeweiligen Kupplung geringer als ein zweiter Schwellenwert ist, wobei der erste und der zweite Schwellenwert vorzugsweise identisch sind.

Gemäß einer vorteilhaften Ausführungsform ist die Achsanordnung als eine Pendelachsanordnung ausgebildet und weist eine Befestigungseinrichtung auf, mittels derer die Achsanordnung pendelnd beweglich an einer Trägereinrichtung eines Fahrzeugs befestigbar ist. Diese Befestigungseinrichtung ist insbesondere in einem mittleren Bereich der Achsanordnung vorgesehen und ist vorzugsweise von den jeweiligen radnabenseitigen Enden der beiden Halbachsen gleich weit entfernt. Die Befestigungseinrichtung fungiert insbesondere als ein Drehgelenk mit horizontal und/oder parallel zur Fahrzeuglängsachse ausgerichteter Drehachse.

Des Weiteren ist es bevorzugt, wenn die Achsanordnung den genannten Motor umfasst, wobei der Motor ein Hydromotor oder ein Elektromotor sein kann. Dabei kann der Motor innerhalb des Gehäuses der Achsanordnung angeordnet sein, wodurch er nach außen besonders gut geschützt ist. Alternativ kann der Motor aber auch außerhalb des Gehäuses angeordnet sein, beispielsweise an einer Außenseite des Gehäuses befestigt, z.B. angeflanscht, sein, um das Eingangselement des Differentialgetriebes anzutreiben, so dass der Motor und die übrige Achsanordnung modular miteinander verbunden sein können, was im Hinblick auf eine Austauschbarkeit und/oder Wartung des Motors vorteilhaft sein kann.

Die Erfindung wird nachfolgend lediglich beispielhaft anhand der Figuren näher erläutert.
- Fig. 1: zeigt in schematischer Darstellung eine Ausführungsform einer antreibbaren Achsanordnung.
- Fig. 2: zeigt eine vergrößerte Teilansicht der in Fig. 1 dargestellten Ausführungsform.
- Fig. 3: zeigt eine weitere Ausführungsform einer antreibbaren Achsanordnung in schematischer Darstellung.
- Fig. 4: zeigt eine antreibbare Achsanordnung in schematischer Darstellung (keine Ausführungsform der Erfindung).

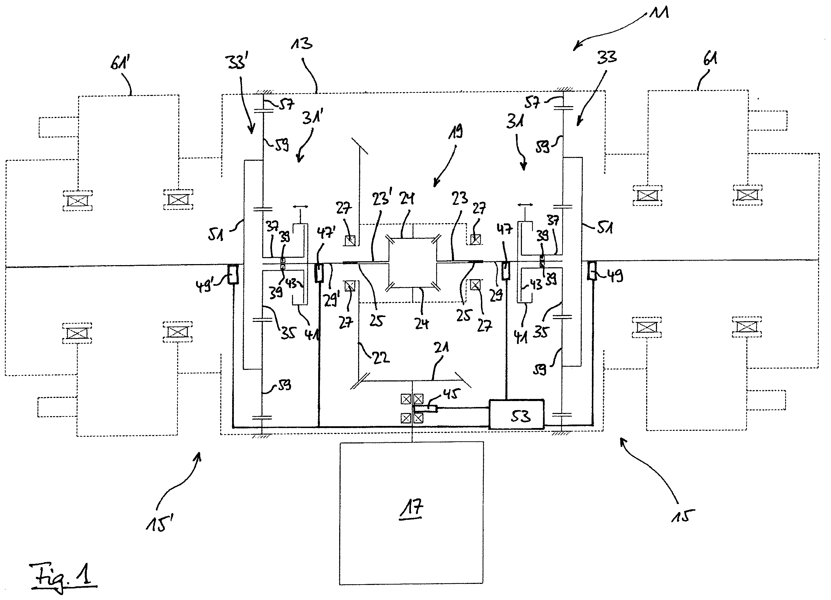

In Fig. 1 ist eine beispielhafte Ausführungsform einer antreibbaren Achsanordnung 11 schematisch dargestellt. Die Achsanordnung 11 umfasst ein Gehäuse 13, in dem zwei Halbachsen (erste Halbachse 15 und zweite Halbachse 15') angeordnet sind. Die Halbachsen 15, 15' sind insofern zumindest im Wesentlichen koaxial zueinander ausgerichtet, als ihre Hauptrotationsachsen miteinander fluchten. Die Halbachsen 15, 15' sind ferner im Wesentlichen einander entsprechend ausgebildet und symmetrisch zu einer Spiegelfläche aufgebaut, die senkrecht zur Längserstreckung der Achsanordnung 11 durch deren Mitte verläuft.

Die Achsanordnung 11 weist in einem mittleren Bereich an einer Außenseite des Gehäuses 13 eine Motorschnittstelle 17 zum Anschließen eines Motors (nicht dargestellt) auf. Die Motorschnittstelle 17 weist insbesondere einen Flansch für eine antriebswirksame Verbindung des Motors auf. Dabei kann der Motor etwa ein Hydromotor oder ein Elektromotor sowie dazu ausgelegt sein, mit den Motorschnittstellen 17 mehrerer grundsätzlich gleichartiger Achsanordnungen 11 verbunden zu werden, um diese parallel anzutreiben.

Über die Motorschnittstelle 17 kann ein Antriebsmoment des Motors in die Achsanordnung 11 eingeleitete werden. Zur Verteilung des Antriebsmoments auf die beiden Halbachsen 15, 15' weist die Achsanordnung 11 ein Differentialgetriebe 19 auf, welches als Kegelraddifferential ausgebildet ist und einen Eingang 21 zum Empfangen des Antriebsmoments hat, der durch ein Kegelrad gebildet ist, welches mit einem an dem Differentialkorb ausgebildeten Tellerrad 22 kämmt. Über zwei Ausgänge (erster Ausgang 23 und zweiter Ausgang 23'), die durch Abtriebskegelräder gebildet sind, wird von dem Differentialgetriebe 19 ein jeweiliger Anteil des Antriebsmoments an die jeweilige Halbachse 15 bzw. 15' ausgeben, wobei über mehrere Ausgleichskegelräder 24 ein Drehzahlausgleich erfolgen kann.

Die beiden Ausgänge 23, 23', erstrecken sich koaxial und entgegengesetzt zueinander in Richtung der jeweiligen Halbachse 15, 15'. Dabei ist das Differentialgetriebe 19 mitsamt Differentialkorb und Tellerrad 22 durch eine als Wälzlager ausgebildete Lagervorrichtung 27 gegenüber dem Gehäuse 13 abgestützt, wodurch somit auch die beiden Ausgänge 23, 23' (über ihren Zahneingriff mit den Ausgleichskegelrädern 24) radial indirekt gelagert sind. Axial können die beiden Ausgänge 23, 23' jeweils z.B. durch Gleitlageranlaufscheiben gelagert sein (nicht dargestellt).

Beide Halbachsen 15, 15' umfassen eine jeweilige Achswelle (erste Achsewelle 29 bzw. zweite Achswelle 29'), eine jeweilige Kupplung (erste Kupplung 31 bzw. zweite Kupplung 31') und ein jeweiliges Untersetzungsgetriebe (erstes Untersetzungsgetriebe 33 bzw. zweites Untersetzungsgetriebe 33').

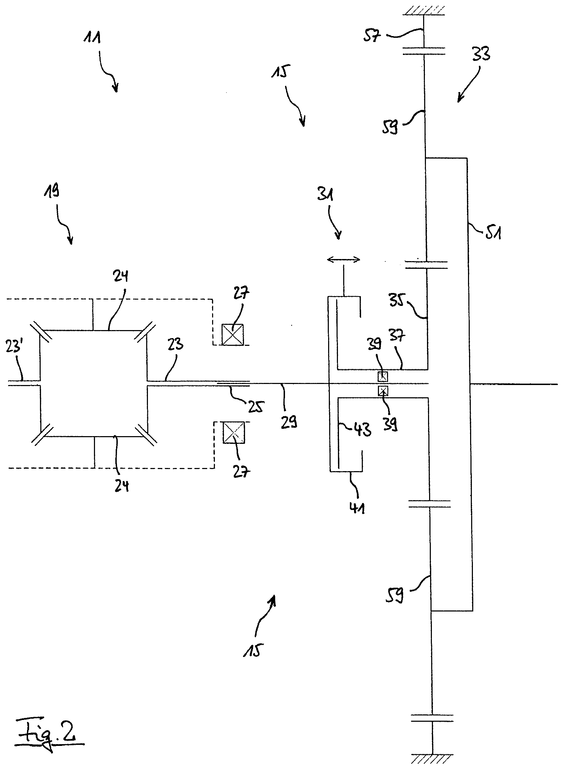

Wie insbesondere in der vergrößerten Teildarstellung der Fig. 2 zu erkennen ist, ist die jeweilige Achswelle 29, 29' mit einem Endabschnitt, nämlich dem bezogen auf die Längserstreckung der Achsanordnung 11 axial inneren Ende, in einem Hohlwellenabschnitt 25 des jeweiligen Ausgangs 23, 23' des Differentialgetriebes 19 aufgenommen. Auf diese Weise ist die jeweilige Achswelle 29, 29' einer jeweiligen Halbachse 15, 15' über den Hohlwellenabschnitt 25, den Zahneingriff zwischen Ausgang 23, 23' und Ausgleichskegelrädern 24, sowie die Lagervorrichtung 27 des Differentialgetriebes 19 (insbesondere in Bezug auf eine Wälzlagerung) lediglich indirekt gegenüber dem Gehäuse 13 drehbar gelagert. Dabei ist die jeweilige Achswelle 29, 29' über einen Zahneingriff zu gemeinsamer Drehung mit dem Hohlwellenabschnitt 25 des jeweiligen Ausgangs 23, 23' des Differentialgetriebes 19 verbunden.

Ähnlich zu dem jeweiligen Ausgang 23, 23' des Differentialgetriebes 19 weist auch ein Eingangselement 35 des jeweiligen Untersetzungsgetriebes 33, 33' einen Hohlwellenabschnitt 37 auf. Der dem genannten Endabschnitt entgegengesetzte Endabschnitt, also das bezogen auf die Längserstreckung der Achsanordnung 11 axial äußere Ende, der jeweiligen Achswelle 29, 29' ist in diesen Hohlwellenabschnitt 37 des Eingangselements 35 des jeweiligen Untersetzungsgetriebes 33, 33' aufgenommen. Dabei ist zwischen der jeweiligen Achswelle 29, 29' und dem Eingangselement 35 des jeweiligen Untersetzungsgetriebes 33, 33' zu deren gegenseitiger Abstützung eine weitere jeweilige Lagervorrichtung 39 vorgesehen, die wiederum als Wälzlager ausgebildet ist, die aber alternativ auch als Gleitlager ausgebildet sein kann.

Somit ist die jeweilige Achswelle 29, 29' zwar an ihren beiden Enden drehbar gelagert, allerdings ist keine unmittelbare Lagerung der jeweiligen Achswelle 29, 29' an dem Gehäuse 13 vorgesehen. Stattdessen ist die jeweilige Achswelle 29, 29' nur einerseits indirekt über den Hohlwellenabschnitt 25 des jeweiligen Ausgangs 23, 23' des Differentialgetriebes 19 an dem Gehäuse 13 drehbar gelagert und andererseits gegenüber dem jeweiligen Untersetzungsgetriebe 33, 33' durch Lagerung in dem Hohlwellenabschnitt 37 des Eingangselements 35 abgestützt. Dies betrifft die radiale Lagerung der jeweiligen Achswelle 29, 29'. Zur axialen Stützung sind zudem nicht dargestellte Gleitlageranlaufscheiben an den Enden der jeweiligen Achswelle 29, 29' vorgesehen.

Das jeweilige Untersetzungsgetriebe 33, 33' kann seinerseits ohne Wälzlagerung an dem Gehäuse 13 abgestützt sein, indem es als Planetengetriebe ausgebildet ist, dessen Hohlrad integral in dem Gehäuse 13 ausgebildet ist, wie nachfolgend noch beschrieben wird. Auf diese Weise kann die Achsanordnung 11 eine besonders geringe Anzahl von Lagervorrichtungen 27, 39, insbesondere Wälzlagervorrichtungen, aufweisen, was im Hinblick auf einen verringerten Bauraum, eine verminderte Komplexität und geringere Kosten vorteilhaft ist.

Über eine Passverzahnung ist die jeweilige Achswelle 29, 29' mit dem Hohlwellenabschnitt 25 des jeweiligen Ausgangs 23, 23' des Differentialgetriebes 19 drehfest, also zu gemeinsamer Drehung, verbunden, so dass das von dem Differentialgetriebe 19 ausgegebene Antriebsmoment anteilig auf die beiden Achswellen 29, 29' übertragen wird. Allerdings sind die jeweilige Achswelle 29, 29' und der Hohlwellenabschnitt 37 des Eingangselements 35 des jeweiligen Untersetzungsgetriebes 33, 33' nicht unmittelbar drehfest miteinander verbunden, sondern aufgrund der dazwischen angeordneten weiteren Lagervorrichtung 39 relativ zueinander frei drehbar gelagert, so dass das Antriebsmoment von der jeweiligen Achswelle 29, 29' nicht unmittelbar auf das jeweilige Untersetzungsgetriebe 33, 33' übertragen wird.

Mit der jeweiligen Achswelle 29, 29' starr verbunden ist eine Schiebemuffe 41 der jeweiligen Kupplung 31, 31', die folglich über das Differentialgetriebe 19 und die jeweilige Achswelle 29, 29' von dem Antriebsmoment zur Drehung angetrieben wird. Die Schiebemuffe 41 kann gemeinsam mit der in den genannten Hohlwellenabschnitten 25, 37 gelagerten jeweiligen Achswelle 29, 29' axial verschoben werden, um wahlweise in formschlüssigen Eingriff mit einem an dem Eingangselement 35 des jeweiligen Untersetzungsgetriebes 33, 33' vorgesehenen Zahnrad 43 (vgl. Fig. 2) gebracht zu werden. Wenn ein solcher Eingriff vorliegt, ist die jeweilige Kupplung 31, 31' geschlossen und überträgt das Antriebsmoment von der jeweiligen Achswelle 29, 29' auf das Eingangselement 35 des jeweiligen Untersetzungsgetriebes 33, 33'. Alternativ zu der Darstellung gemäß Fig. 1 und 2 kann die Schiebemuffe 41 mit der jeweiligen Achswelle 29, 29' drehfest, jedoch axial verschieblich verbunden sein.

Um sicherzustellen, dass die jeweilige Kupplung 31, 31' lediglich dann geschlossen wird, wenn die Eingangsdrehzahl, also die Drehzahl der jeweiligen Achswelle 29, 29', und die Ausgangsdrehzahl, also die Drehzahl des Eingangselements 35 des jeweiligen Untersetzungsgetriebes 33, 33', nahezu identisch sind, sind Drehzahlsensoren 45, 47, 47', 49, 49' vorgesehen, die in Fig. 1 dargestellt sind.

Konkret ist ein Eingangsdrehzahlsensor 45 am Eingang 21 des Differentialgetriebes 19 angeordnet, um eine Eingangsdrehzahl des Differentialgetriebes 19 zu erfassen. Daraus kann dann eine mittlere Eingangsdrehzahl der beiden Kupplungen 31, 31' bestimmt werden. Alternativ sind anstelle des genannten Eingangsdrehzahlsensors 45 an beiden Halbachsen 15, 15' ein jeweiliger Eingangsdrehzahlsensor (erster Eingangsdrehzahlsensor 47 bzw. zweiter Eingangsdrehzahlsensor 47') vorgesehen, der an der jeweiligen Achswelle 29, 29' angeordnet ist, um die Eingangsdrehzahl der jeweiligen Kupplung 31, 31' unmittelbar und für beide Kupplungen 31, 31' separat zu erfassen. Diese beiden Alternativen sind in Fig. 1 überlagert dargestellt.

Des Weiteren umfassen die genannten Drehzahlsensoren 45, 47, 47', 49, 49' bei beiden vorgenannten Alternativen an beiden Halbachsen 15, 15' einen jeweiligen Ausgangsdrehzahlsensor (erster Ausgangsdrehzahlsensor 49 bzw. zweiter Ausgangsdrehzahlsensor 49'), der an einem Ausgangselement 51 des jeweiligen Untersetzungsgetriebes 33, 33' angeordnet ist, um über das bekannte, feste Untersetzungsverhältnis des jeweiligen Untersetzungsgetriebes 33, 33' die Ausgangsdrehzahl der jeweiligen Kupplung 31, 31' zu erfassen. Alternativ kann der jeweilige Ausgangsdrehzahlsensor 49, 49' auch unmittelbar am Eingangselement 35 des jeweiligen Untersetzungsgetriebes 33, 33' angeordnet sein, so dass eine Umrechnung gemäß dem Untersetzungsverhältnis entfällt. Diese Alternative ist in den Figuren nicht dargestellt.

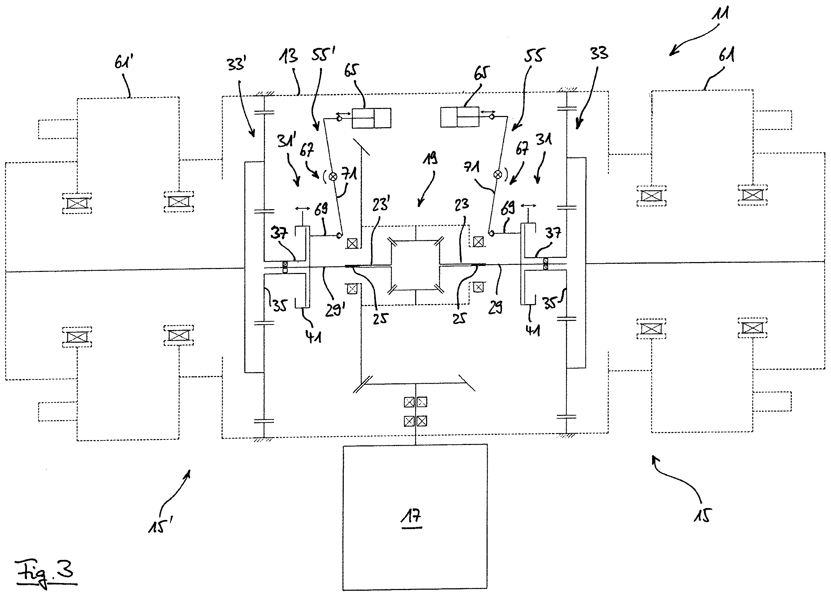

Die Drehzahlsensoren 45, 47, 47', 49, 49' sind mit einer Steuervorrichtung 53 verbunden, welche die erfassten Eingangsdrehzahlen und Ausgangsdrehzahlen erfasst, gegebenenfalls umrechnet und in Abhängigkeit von einem so ermittelten (jeweiligen) Drehzahlunterschied die Kupplungen 31, 31' ansteuert. Dazu kann die Steuervorrichtung 53 mit jeweiligen Schaltvorrichtungen (erste Schaltvorrichtungen 55 bzw. zweite Schaltvorrichtungen 55') verbunden sein, welche die Kupplungen 31, 31' betätigen, aber in den Fig. 1 und 2 nicht dargestellt sind (vgl. weitere Ausführungsform in Fig. 3).

Das jeweilige Untersetzungsgetriebe 33, 33' ist als Planetengetriebe ausgebildet, das ein Sonnenrad als das genannte Eingangselement 35, einen Planetenträger als das genannte Ausgangselement 51 und ein Hohlrad 57 umfasst, welches drehfest mit dem Gehäuse 13 verbunden ist, da es integral in dem Gehäuse 13 ausgebildet ist. An dem Planetenträger 51 sind mehrere Planetenräder 59 drehbar gelagert, die mit dem Sonnenrad 35 und dem Hohlrad 57 kämmen. Dabei sind die Verzahnungen der Räder 35, 57, 59 so ausgelegt, dass ein auf das Sonnenrad 35 übertragenes umgewandeltes Antriebsmoment mit verringerter Drehzahl und erhöhtem Drehmoment an dem Planetenträger 51 ausgegeben wird.

Als Ausgangselement 51 des jeweiligen Untersetzungsgetriebes 33, 33' gibt der Planetenträger 51 das umgewandelte Antriebsmoment letztlich an jeweilige Radnaben (erste Radnabe 61 bzw. zweite Radnabe 61') aus, um an der Achsanordnung 11 angeordnete Räder, bei denen es sich auch um Zwillingsradanordnungen handeln kann, über die Achsanordnung 11 anzutreiben. Dabei kann eine jeweilige Radnabe 61, 61' an das Ausgangselement 51 des jeweiligen Untersetzungsgetriebes 33, 33' unmittelbar oder mittelbar, z.B. über eine weitere jeweilige Welle, angeflanscht sein. Die jeweilige Radnabe 61, 61' kann aber auch einstückig mit dem Ausgangselement 51 ausgebildet sein, wie es in Fig. 3 gezeigt ist. Letztlich ist aber unabhängig von der konkreten Kopplung die jeweilige Radnabe 61, 61' dauerhaft antriebswirksam mit dem jeweiligen Untersetzungsgetriebe 33, 33' verbunden und nicht, etwa über eine Kupplung, wahlweise von dem Untersetzungsgetriebe 33, 33' trennbar.

Wie bei der Ausführungsform in Fig. 3 dargestellt ist der jeweiligen Kupplung 31, 31' eine jeweilige Schaltvorrichtung 55, 55' zugeordnet, die einen Aktuator 65 zur Erzeugung eines Schalthubs und ein Übertragungselement 67 zur Übertragung des Schalthubs zu der jeweiligen Kupplung 31, 31' umfasst. Dabei ist das Übertragungselement 67 als eine Gelenkanordnung aus Schubstangen 69 und einem Kipphebel 71 ausgebildet, um den Schalthub des Aktuators 65 der jeweiligen Schaltvorrichtung 55, 55' entlang eines möglicherweise z.B. durch die Form des Gehäuses 13 eingeschränkten, gewinkelten Pfades vom Aktuator 65 zur jeweiligen Kupplung 31, 31' zu übertragen.

Mittels des Übertragungselements 67 kann daher die jeweilige Schaltvorrichtung 55, 55' beabstandet von der jeweiligen Kupplung 31, 31' und insbesondere im Hinblick auf den vorhandenen Bauraum angeordnet werden. Beispielsweise kann das dem Aktuator zugeordnete Ende des Übertragungselements 67 näher an dem Differentialgetriebe 19 und/oder (wie in Fig. 3 gezeigt) radial weiter von der Drehachse der Achsanordnung 11 entfernt angeordnet sein als das der jeweiligen Kupplung 31, 31' zugeordnete Ende. Alternativ zu der in Fig. 3 dargestellten Anordnung kann die jeweilige Kupplung 31, 31' auch in einem von der jeweiligen Radnabe 61, 61' umgebenen Bereich der jeweiligen Halbachse 15, 15' angeordnet sein, der daher vergleichsweise weniger Bauraum aufweist als ein zentraler, nicht von den Radnaben 61, 61' umgebener Bereich, in dem das Differentialgetriebe 19 aufgenommen sein kann und der auch Platz für die Aktuatoren 65 der Schaltvorrichtungen 55, 55' aufweisen kann.

Die Aktuatoren 65 der in Fig. 3 gezeigten Ausführungsform sind als hydraulische Aktuatoren ausgebildet, können grundsätzlich aber auch andersartig, z.B. elektrisch oder pneumatisch wirksam sein. Zudem werden die Aktuatoren 65 von einer gemeinsamen Steuervorrichtung 53 angesteuert (in Fig. 3 nicht dargestellt, vgl. Fig. 1), wobei die beiden Kupplungen 31, 31' stets gemeinsam geöffnet bzw. geschlossen werden, und wobei das Schließen der Kupplungen 31, 31' in Abhängigkeit davon erfolgt, ob eine Drehzahldifferenz zwischen einer Eingangsdrehzahl und einer Ausgangsdrehzahl der jeweiligen Kupplungen 31, 31' Null beträgt oder zumindest unterhalb eines Schwellenwertes liegt.

Im Unterschied zu der in Fig. 1 dargestellten Ausführungsform ist bei der in Fig. 3 dargestellten Ausführungsform die Schiebemuffe 41 der jeweiligen Kupplung 31, 31' nicht starr, sondern lediglich drehfest mit der jeweiligen Achswelle 29, 29' verbunden, ansonsten aber relativ zu der jeweiligen Achswelle 29, 29' axial beweglich gelagert. Dies kann beispielsweise dadurch realisiert sein, dass die Schiebmuffe über eine Passverzahnung mit der jeweiligen Achswelle 29, 29' zusammenwirkt. Bei einem Schalten der jeweiligen Kupplung 31, 31' wird somit lediglich die Schiebemuffe 41, nicht aber auch die jeweilige Achswelle 29, 29' axial versetzt. Gleichwohl wird hierdurch die Schiebemuffe 41 wahlweise in formschlüssigen und antriebswirksamen Eingriff mit dem Zahnrad 43 gebracht, so dass das Antriebsmoment, welches die jeweilige Achswelle 29, 29' antreibt, über die Schiebemuffe 41 und über das Zahnrad 43 auf das Eingangselement 35 des jeweiligen Untersetzungsgetriebes 33, 33' übertragen werden kann.

Die in Fig. 3 dargestellte Ausführungsform einer Achsanordnung 11 kann als eine Pendelachsanordnung ausgebildet sein. Hierzu kann die Achsanordnung 11 eine Befestigungseinrichtung aufweisen (nicht dargestellt), die beispielsweise als eine Erweiterung einer Wand des Gehäuses 13 in Form einer massiven Lasche ausgebildet ist und mittels derer die Achsanordnung pendelnd beweglich an einer Trägereinrichtung eines Fahrzeugs (nicht dargestellt) befestigbar ist. Die Befestigungseinrichtung wirkt insofern als Drehgelenk, das ein Schwenken der Achsanordnung 11 um eine durch die Befestigungseinrichtung definierte, senkrecht zur Drehachse der Achsanordnung 11 ausgerichtete Pendelachse (senkrecht zur Darstellungsebene) ermöglicht.

Trotz der Kompaktheit einer solchen Achsanordnung 11, insbesondere wenn diese an beiden Halbachsen 15, 15' Zwillingsradanordnungen aufweist, ist es mithilfe des erfindungsgemäßen Aufbaus der Achsanordnung 11 möglich, diese wahlweise direkt anzutreiben oder im Schleppbetrieb einzusetzen, ohne dass dadurch die zentralen Getriebekomponenten sowie der Motor durch übermäßige Drehzahlen belastet werden.

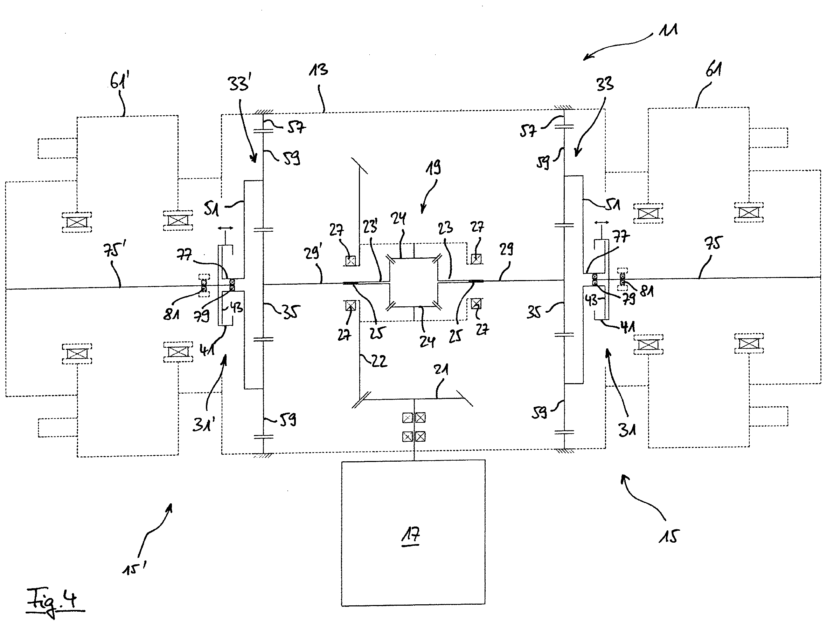

Die in Fig. 4 schematisch dargestellte Ausführungsform (keine Ausführungsform der Erfindung) stimmt weitgehend mit der in Fig. 1 dargestellten Ausführungsform überein. Wesentlicher Unterschied ist aber, dass die jeweilige Kupplung 31, 31' der beiden Halbachsen 15, 15' bei dieser Ausführungsform nicht zwischen dem Differentialgetriebe 19 und dem jeweiligen Untersetzungsgetriebe 33, 33' vorgesehen ist, sondern auf der Radseite des jeweiligen Untersetzungsgetriebes 33, 33', die niedrigere Drehzahlen, aber höhere Drehmomente aufweist. Auch bei einer solchen Anordnung ist insgesamt die jeweilige Radnabe 61, 61' mittels der jeweiligen Kupplung 31, 31' wahlweise antriebswirksam mit dem jeweiligen Ausgang 23, 23' des Differentialgetriebes 19 verbindbar bzw. hiervon trennbar. Die Trennung erfolgt aber zwischen der jeweiligen Radnabe 61, 61' und dem jeweiligen Untersetzungsgetriebe 33, 33'. Aufgrund der dort höheren Drehmomente kann die jeweilige Kupplung 31, 31' nicht so leicht dimensioniert sein wie bei den Ausführungsformen der Fig. 1 bis 3. Allerdings hat die Ausführungsform der Fig. 4 den Vorteil, dass im Schleppbetrieb eine Drehung der jeweiligen Radnabe 61, 61' bei offener Kupplung 31, 31' gar nicht erst auf das jeweilige Untersetzungsgetriebe 33, 33' übertragen wird, so dass Schleppverluste am Untersetzungsgetriebe 33, 33' vermieden werden können.

Bei der in Fig. 4 gezeigten Ausführungsform kann die jeweilige Achswelle 29, 29' zur Verbindung des jeweiligen Ausgangs 23, 23' des Differentialgetriebes 19 mit dem Eingangselement 35 des jeweiligen Untersetzungsgetriebes 33, 33' auch einstückig mit dem jeweiligen Ausgang 23, 23' und/oder (wie gezeigt) mit dem Eingangselement 35 ausgebildet sein, wobei an einem freien Ende der Achswelle 29, 29' wiederum eine indirekte Lagerung, gegebenenfalls über den Zahneingriff einer Passverzahnung, in einem Hohlwellenabschnitt 25 bzw. 37 des jeweiligen Ausgangs 23, 23' bzw. des Eingangselements 35 erfolgen kann.

Bei dieser Ausführungsform muss jedoch zwischen dem Ausgangselement 51 des jeweiligen Untersetzungsgetriebes 33, 33' und der jeweiligen Radnabe 61, 61' zusätzlich zumindest ein jeweiliges Abtriebselement 75, 75' vorgesehen sein, welches antriebswirksam mit der jeweiligen Radnabe 61, 61' verbunden ist und mittels der jeweiligen Kupplung 31, 31' wahlweise antriebswirksam mit dem Ausgangselement 51 verbindbar bzw. hiervor trennbar ist. Dieses Abtriebselement 75, 75' ist bei der Ausführungsform der Fig. 4 als Abtriebswelle ausgebildet, die eine daran drehfest angeordnete Schiebemuffe 41 der Kupplung 33, 33' aufweist, welche wahlweise (z.B. über eine nicht dargestellte, wie vorstehend beschriebene Schaltvorrichtung 55, 55') in Eingriff mit einem Zahnrad 43 der Kupplung 33, 33' bringbar ist, welches drehfest mit dem Ausgangselement 51 verbunden oder an diesem ausgebildet ist. Die Schiebemuffe 41 kann aber auch umgekehrt an dem Ausgangselement 51 vorgesehen sein und das Zahnrad an der Abtriebswelle 75, 75'.

Zur Lagerung der Abtriebswelle 75, 75' kann sie mit einem Ende in einem Hohlwellenabschnitt 77 des Ausgangselements 51 aufgenommen sein und über eine weitere Lagervorrichtung 79 frei drehbar in dem Hohlwellenabschnitt 77 zumindest radial gelagert sein. Zur axialen Lagerung können zudem nicht gezeigte Gleitlageranlaufscheiben vorgesehen sein. Ergänzend kann die Abtriebswelle 75, 75' außerdem auch gegen das Gehäuse 13 der Achsanordnung 11 über eine wiederum weitere Lagervorrichtung 81 abgestützt sein. Bei den Lagervorrichtungen 79, 81 handelt es sich insbesondere um Wälzlager.

### Bezugszeichenliste

- 11: Achsanordnung
- 13: Gehäuse
- 15, 15': Halbachse
- 17: Motorschnittstelle
- 19: Differentialgetriebe
- 21: Eingang
- 22: Tellerrad
- 23, 23': Ausgang
- 24: Ausgleichskegelrad
- 25: Hohlwellenabschnitt
- 27: Lagervorrichtung
- 29, 29': Achswelle
- 31, 31': Kupplung
- 33, 33': Untersetzungsgetriebe
- 35: Eingangselement
- 37: Hohlwellenabschnitt
- 39: weitere Lagervorrichtung
- 41: Schiebemuffe
- 43: Zahnrad
- 45: Eingangsdrehzahlsensor
- 47, 47': Eingangsdrehzahlsensor
- 49, 49': Ausgangsdrehzahlsensor
- 51: Ausgangselement
- 53: Steuervorrichtung
- 55, 55': Schaltvorrichtung
- 57: Hohlrad
- 59: Planetenrad
- 61,61': Radnabe
- 65: Aktuator
- 67: Übertragungselement
- 69: Schubstange
- 71: Kipphebel
- 75, 75': Abtriebswelle
- 77: Hohlwellenabschnitt
- 79: weitere Lagervorrichtung
- 81: weitere Lagervorrichtung

## Patentansprüche

1. Antreibbare Achsanordnung (11) mit zwei Halbachsen (15, 15') zum Antreiben einer jeweiligen Radnabe (61, 61') und einem zwischen den Halbachsen (15, 15') vorgesehenen Differentialgetriebe (19) zur Verteilung eines Antriebsmoments eines Motors auf die beiden Halbachsen (15, 15'), wobei das Differentialgetriebe (19) einen Eingang (21) zum Empfangen des Antriebsmoments und zwei Ausgänge (23, 23') zum Ausgeben des Antriebsmoments an eine jeweilige Halbachse (15, 15') aufweist,
wobei die Halbachsen (15, 15') eine jeweilige Kupplung (31, 31') sowie ein jeweiliges Untersetzungsgetriebe (33, 33') mit einem Eingangselement (35) und einem Ausgangselement (51) aufweisen, welches eine Drehzahl des Ausgangselements (51) relativ zu dem Eingangselement (35) ins Langsame übersetzt,
wobei die jeweilige Kupplung (31, 31') derart angeordnet ist, dass die jeweilige Radnabe (61, 61') mittels der jeweiligen Kupplung (31, 31') wahlweise antriebswirksam mit dem jeweiligen Ausgang (23, 23') des Differentialgetriebes (19) verbindbar oder hiervon trennbar ist,
wobei das jeweilige Untersetzungsgetriebe (33, 33') als Planetengetriebe ausgebildet ist, das ein Sonnenrad (35), einen Planetenträger (51) und ein Hohlrad (57) umfasst, wobei an dem Planetenträger (51) eine Anordnung von Planetenrädern (59) drehbar gelagert ist, die mit dem Sonnenrad (35) und dem Hohlrad (57) kämmen, wobei das Hohlrad (57) stationär ausgebildet ist, wobei das Sonnenrad (35) das genannte Eingangselement (35) des jeweiligen Untersetzungsgetriebes (33, 33') bildet und wobei der Planetenträger (51) das genannte Ausgangselement (51) des jeweiligen Untersetzungsgetriebes (33, 33') bildet,
wobei die Halbachsen (15, 15') ferner eine jeweilige Achswelle (29, 29') aufweisen,
wobei das Eingangselement (35) des jeweiligen Untersetzungsgetriebes (33, 33') über die jeweilige Achswelle (29, 29') antriebswirksam mit dem jeweiligen Ausgang (23, 23') des Differentialgetriebes (19) verbunden oder verbindbar ist und einen Hohlwellenabschnitt (37) aufweist, in dem die jeweilige Achswelle (29, 29') teilweise aufgenommen ist,
wobei die jeweilige Achswelle (29, 29') in dem Hohlwellenabschnitt (37) des Eingangselements (35) des jeweiligen Untersetzungsgetriebes (33, 33') über eine Lagervorrichtung (39) drehbar gelagert ist,
wobei die jeweilige Achswelle (29, 29') ausschließlich indirekt gelagert ist, und wobei die zwei Halbachsen (15, 15') einander entsprechend, insbesondere spiegelsymmetrisch zueinander, ausgebildet sind.

2. Achsanordnung nach Anspruch 1,
wobei das Eingangselement (35) des jeweiligen Untersetzungsgetriebes (33, 33') mittels der jeweiligen Kupplung (31, 31') wahlweise antriebswirksam mit dem jeweiligen Ausgang (23, 23') des Differentialgetriebes (19) verbindbar oder hiervon trennbar ist, und wobei das Ausgangselement (51) des jeweiligen Untersetzungsgetriebes (33, 33') antriebswirksam mit der jeweiligen Radnabe (61, 61') verbunden oder verbindbar ist.

3. Achsanordnung nach Anspruch 1 oder 2,
wobei die jeweilige Achswelle (29, 29') antriebswirksam mit dem jeweiligen Ausgang (23, 23') des Differentialgetriebes (19) verbunden ist, und wobei die jeweilige Achswelle (29, 29') mittels der jeweiligen Kupplung (31, 31') wahlweise antriebswirksam mit dem Eingangselement (35) des jeweiligen Untersetzungsgetriebes (33, 33') verbindbar ist.

4. Achsanordnung nach zumindest einem der vorstehenden Ansprüche,
wobei der jeweilige Ausgang (23, 23') des Differentialgetriebes (19) einen Hohlwellenabschnitt (25) aufweist, und wobei die jeweilige Achswelle (29, 29') teilweise in dem Hohlwellenabschnitt (25) des Ausgangs (23, 23') des Differentialgetriebes (19) drehfest aufgenommen ist.

5. Achsanordnung nach Anspruch 4,
wobei der jeweilige Ausgang (23, 23') des Differentialgetriebes (19) ausschließlich indirekt gelagert ist.

6. Achsanordnung nach zumindest einem der vorstehenden Ansprüche,
wobei die jeweilige Kupplung (31, 31') als formschlüssige Kupplung ausgebildet ist.

7. Achsanordnung nach zumindest einem der Ansprüche 1 bis 5,
wobei die jeweilige Kupplung (31, 31') als kraftschlüssige Kupplung ausgebildet ist.

8. Achsanordnung nach zumindest einem der vorstehenden Ansprüche,
wobei der jeweiligen Kupplung (31, 31') eine jeweilige Schaltvorrichtung (55, 55') zum Schalten der jeweiligen Kupplung (31, 31') zugeordnet ist.

9. Achsanordnung nach Anspruch 8,
wobei die jeweilige Schaltvorrichtung (55, 55') einen Aktuator (65) und ein Übertragungselement (67) aufweist, um einen Schalthub des Aktuators (65) mittels des Übertragungselements (67) zur jeweiligen Kupplung (31, 31') zu übertragen, wobei das Übertragungselement (67) ein dem Aktuator (65) zugeordnetes erstes Ende und ein der jeweiligen Kupplung (31, 31') zugeordnetes zweites Ende aufweist, und wobei das erste Ende des Übertragungselements (67) näher an dem Differentialgetriebe (19) und/oder radial weiter von der Drehachse der Achsanordnung (11) entfernt angeordnet ist als das zweite Ende.

10. Achsanordnung nach Anspruch 9,
wobei das Übertragungselement (67) eine Gelenkanordnung aufweist.

11. Achsanordnung nach zumindest einem der Ansprüche 8 bis 10,
wobei die Schaltvorrichtungen (55, 55') zum Schalten der jeweiligen Kupplung (31, 31') der beiden Halbachsen (15, 15') dazu ausgebildet sind, die Kupplungen (31, 31') gemeinsam zu schalten.

12. Achsanordnung nach zumindest einem der Ansprüche 1 bis 7,
wobei den beiden Kupplungen (31, 31') eine Schaltvorrichtung zum Schalten der beiden Kupplungen (31, 31') zugeordnet ist, wobei die Schaltvorrichtung einen für beide Kupplungen (31, 31') gemeinsamen Aktuator (65) und wenigstens ein jeweiliges Übertragungselement (67) aufweist, um einen Schalthub des Aktuators (65) mittels des jeweiligen Übertragungselements (67) zur jeweiligen Kupplung (31, 31') zu übertragen, wobei das jeweilige Übertragungselement (67) ein dem Aktuator (65) zugeordnetes erstes Ende und ein der jeweiligen Kupplung (31, 31') zugeordnetes zweites Ende aufweist, und wobei das erste Ende des jeweiligen Übertragungselements (67) näher an dem Differentialgetriebe (19) und/oder radial weiter von der Drehachse der Achsanordnung (11) entfernt angeordnet ist als das zweite Ende.

## Claims

1. A drivable axle arrangement (11) comprising two half-axles (15, 15') for driving a respective wheel hub (61, 61'); and a differential gear (19) provided between the half-axles (15, 15') for distributing a drive torque of an engine to the two half-axles (15, 15'),
wherein the differential gear (19) has an input (21) for receiving the drive torque and two outputs (23, 23') for outputting the drive torque to a respective half-axle (15, 15');
wherein the half-axles (15, 15') have a respective clutch (31, 31') and a respective reduction gear (33, 33') which has an input element (35) and an output element (51) and which steps down a rotational speed of the output element (51) relative to the input element (35);
wherein the respective clutch (31, 31') is arranged such that the respective wheel hub (61, 61') can selectively be drive-effectively connected to the respective output (23, 23') of the differential gear (19) or separated therefrom by means of the respective clutch (31, 31');
wherein the respective reduction gear (33, 33') is configured as a planetary gear which comprises a sun gear (35), a planet carrier (51) and an annulus gear (57); wherein an arrangement of planet gears (59) meshing with the sun gear (35) and with the annulus gear (57) is rotatably supported at the planet carrier (51); wherein the annulus gear (57) is stationary; wherein the sun gear (35) forms said input element (35) of the respective reduction gear (33, 33'); and wherein the planet carrier (51) forms said output element (51) of the respective reduction gear (33, 33');
wherein the two half-axles (15, 15') furthermore have a respective half-shaft (29, 29');
wherein the input element (35) of the respective reduction gear (33, 33') is drive-effectively connected or connectable to the respective output (23, 23') of the differential gear (19) via the respective half-shaft (29, 29') and has a hollow shaft section (37) in which the respective half-shaft (29, 29') is partly received;
wherein the respective half-shaft (29, 29') is rotatably supported, via a support apparatus (39), in the hollow shaft section (37) of the input element (35) of the respective reduction gear (33, 33');
wherein the respective half-shaft (29, 29') is only indirectly supported; and wherein the two half-axles (15, 15') are configured as mutually corresponding, in particular as mirror-symmetrical with respect to one another.

2. An axle arrangement in accordance with claim 1,
wherein the input element (35) of the respective reduction gear (33, 33') can selectively be drive-effectively connected to the respective output (23, 23') of the differential gear (19) or separated therefrom by means of the respective clutch (31, 31'); and wherein the output element (51) of the respective reduction gear (33, 33') is drive-effectively connected or connectable to the respective wheel hub (61, 61').

3. An axle arrangement in accordance with claim 1 or claim 2,
wherein the respective half-shaft (29, 29') is drive-effectively connected to the respective output (23, 23') of the differential gear (19); and wherein the respective half-shaft (29, 29') can selectively be drive-effectively connected to the input element (35) of the respective reduction gear (33, 33') by means of the respective clutch (31, 31').

4. An axle arrangement in accordance with at least one of the preceding claims,
wherein the respective output (23, 23') of the differential gear (19) has a hollow shaft section (25); and wherein the respective half-shaft (29, 29') is partly rotationally fixedly received in the hollow shaft section (25) of the output (23, 23') of the differential gear (19).

5. An axle arrangement in accordance with claim 4,
wherein the respective output (23, 23') of the differential gear (19) is only indirectly supported.

6. An axle arrangement in accordance with at least one of the preceding claims,
wherein the respective clutch (31, 31') is configured as a shape-matched clutch.

7. An axle arrangement in accordance with at least one of the claims 1 to 5,
wherein the respective clutch (31, 31') is configured as a force-transmitting clutch.

8. An axle arrangement in accordance with at least one of the preceding claims,
wherein a respective shifting apparatus (55, 55') for shifting the respective clutch (31, 31') is associated with the respective clutch (31, 31').

9. An axle arrangement in accordance with claim 8,
wherein the respective shifting apparatus (55, 55') has an actuator (65) and a transfer element (67) to transfer a shift stroke of the actuator (65) to the respective clutch (31, 31') by means of the transfer element (67); wherein the transfer element (67) has a first end associated with the actuator (65) and a second end associated with the respective clutch (31, 31'); and
wherein the first end of the transfer element (67) is arranged closer to the differential gear (19) and/or radially further away from the axis of rotation of the axle arrangement (11) than the second end.

10. An axle arrangement in accordance with claim 9,
wherein the transfer element (67) has an articulated arrangement.

11. An axle arrangement in accordance with at least one of the claims 8 to 10, wherein the shifting apparatus (55, 55') for shifting the respective clutch (31, 31') of the two half-axles (15, 15') are configured to shift the clutches (31, 31') together.

12. An axle arrangement in accordance with at least one of the claims 1 to 7, wherein a shifting apparatus (55, 55') for shifting the two clutches (31, 31') is associated with the two clutches (31, 31'); wherein the shifting apparatus has a common actuator (65) for both clutches (31, 31') and at least one respective transfer element (67) to transfer a shift stroke of the actuator (65) to the respective clutch (31, 31') by means of the respective transfer element (67); wherein the respective transfer element (67) has a first end associated with the actuator (65) and a second end associated with the respective clutch (31, 31'); and wherein the first end of the respective transfer element (67) is arranged closer to the differential gear (19) and/or radially further away from the axis of rotation of the axle arrangement (11) than the second end.

## Revendications

1. Système d'essieu (11) susceptible d'être entraîné, comportant deux demi-essieux (15, 15') pour entraîner un moyeu de roue respectif (61, 61') et une transmission différentielle (19) prévue entre les demi-essieux (15, 15') pour répartir un couple d'entraînement d'un moteur sur les deux demi-essieux (15, 15'),
dans lequel
la transmission différentielle (19) présente une entrée (21) pour recevoir le couple d'entraînement, et deux sorties (23, 23') pour transmettre le couple d'entraînement à un demi-essieu respectif (15, 15'),
les demi-essieux (15, 15') présentent un coupleur respectif (31, 31') ainsi qu'un mécanisme démultiplicateur respectif (33, 33') pourvu d'un élément d'entrée (35) et d'un élément de sortie (51), qui réduit une vitesse de rotation de l'élément de sortie (51) par rapport à l'élément d'entrée (35),
le coupleur respectif (31, 31') est agencé de telle sorte que le moyeu de roue respectif (61, 61') est susceptible d'être relié en entraînement ou d'être séparé au choix de la sortie respective (23, 23') de la transmission différentielle (19) au moyen du coupleur respectif (31, 31'),
le mécanisme démultiplicateur respectif (33, 33') est réalisé sous forme d'engrenage planétaire qui comprend une roue solaire (35), un porte-satellites (51) et une couronne (57), un agencement de roues satellites (59) étant monté mobile en rotation sur le porte-satellites (51), qui engrènent avec la roue solaire (35) et avec la couronne (57), la couronne (57) étant réalisée stationnaire, la roue solaire (35) constituant ledit élément d'entrée (35) du mécanisme démultiplicateur respectif (33, 33') et le porte-satellites (51) constituant ledit élément de sortie (51) de mécanisme démultiplicateur respectif (33, 33'),
les demi-essieux (15, 15') présentent en outre un arbre d'essieu respectif (29, 29'),
l'élément d'entrée (35) du mécanisme démultiplicateur respectif (33, 33') est relié ou susceptible d'être relié en entraînement à la sortie respective (23, 23') de la transmission différentielle (19) par l'arbre d'essieu respectif (29, 29'), et comprend un tronçon d'arbre creux (37) dans lequel l'arbre d'essieu respectif (29, 29') est logé partiellement,
l'arbre d'essieu (29, 29') est monté mobile en rotation dans le tronçon d'arbre creux (37) de l'élément d'entrée (35) du mécanisme démultiplicateur respectif (33, 33') par un dispositif formant palier (39),
l'arbre d'essieu (29, 29') est monté exclusivement de façon indirecte, et les demi-essieux (15, 15') sont réalisés de manière à se correspondre, en particulier à symétrie l'un par rapport à l'autre.

2. Système d'essieu selon la revendication 1,
dans lequel
l'élément d'entrée (35) du mécanisme démultiplicateur respectif (33, 33') est susceptible d'être relié en entraînement ou d'être séparé au choix de la sortie respective (23, 23') de la transmission différentielle (19) au moyen du coupleur respectif (31, 31'), et
l'élément de sortie (51) du mécanisme démultiplicateur respectif (33, 33') est relié ou susceptible d'être relié en entraînement au moyeu de roue respectif (61, 61').

3. Système d'essieu selon la revendication 1 ou 2,
dans lequel
l'arbre d'essieu respectif (29, 29') est relié en entraînement à la sortie respective (23, 23') de la transmission différentielle (19), et
l'arbre d'essieu respectif (29, 29') est susceptible d'être relié en entraînement au choix à l'élément d'entrée (35) du mécanisme démultiplicateur respectif (33, 33') au moyen du coupleur respectif (31, 31').

4. Système d'essieu selon l'une au moins des revendications précédentes,
dans lequel
la sortie respective (23, 23') de la transmission différentielle (19) comprend un tronçon d'arbre creux (25), et
l'arbre d'essieu respectif (29, 29') est logé solidairement en rotation partiellement dans le tronçon d'arbre creux (25) de la sortie (23, 23') de la transmission différentielle (19).

5. Système d'essieu selon la revendication 4,
dans lequel
la sortie respective (23, 23') de la transmission différentielle (19) est montée exclusivement de façon indirecte.

6. Système d'essieu selon l'une au moins des revendications précédentes,
dans lequel
le coupleur respectif (31, 31') est réalisé sous forme de coupleur à coopération de forme.

7. Système d'essieu selon l'une au moins des revendications précédentes,
dans lequel
le coupleur respectif (31, 31') est réalisé sous forme de coupleur à coopération de force.

8. Système d'essieu selon l'une au moins des revendications précédentes,
dans lequel
un dispositif commutateur respectif (55, 55') pour commuter le coupleur respectif (31, 31') est associé au coupleur respectif (31, 31').

9. Système d'essieu selon la revendication 8,
dans lequel
le dispositif commutateur respectif (55, 55') comprend un actionneur (65) et un élément de transmission (67) pour transmettre une course de commutation de l'actionneur (65) au coupleur respectif (31, 31') au moyen de l'élément de transmission (67), et
l'élément de transmission (67) présente une première extrémité associée à l'actionneur (65) et une seconde extrémité associée au coupleur respectif (31, 31'), et
la première extrémité de l'élément de transmission (67) est agencée plus près de la transmission différentielle (19) et/ou radialement plus éloignée de l'axe de rotation du système d'essieu (11) que ne l'est la seconde extrémité.

10. Système d'essieu selon la revendication 9,
dans lequel
l'élément de transmission (67) comprend un ensemble d'articulation.

11. Système d'essieu selon l'une au moins des revendications 8 à 10,
dans lequel
les dispositifs commutateurs (55, 55') pour commuter le coupleur respectif (31, 31') des deux demi-essieux (15, 15') sont réalisés pour commuter conjointement les coupleurs (31, 31').

12. Système d'essieu selon l'une au moins des revendications 1 à 7,
dans lequel
un dispositif commutateur est associé aux deux coupleurs (31, 31') pour commuter les deux coupleurs (31, 31'),
le dispositif commutateur comprend un actionneur (65) commun pour les deux coupleurs (31, 31') et au moins un élément de transmission respectif (67) pour transmettre une course de commutation de l'actionneur (65) au coupleur respectif (31, 31') au moyen de l'élément de transmission respectif (67),
l'élément de transmission respectif (67) présente une première extrémité associée à l'actionneur (65) et une seconde extrémité associée au coupleur respectif (31, 31'), et
la première extrémité de l'élément de transmission respectif (67) est agencée plus près de la transmission différentielle (19) et/ou radialement plus éloignée de l'axe de rotation du système d'essieu (11) que ne l'est la seconde extrémité.
